Europäisches Patentamt

European Patent Office

Office européen des brevets

(19)

(11) Publication number: **0 145 031**
**B1**

(12) **EUROPEAN PATENT SPECIFICATION**

(45) Date of publication of patent specification: **04.05.88**

(51) Int. Cl.⁴: **C 03 B 37/012**

(21) Application number: **84201088.6**

(22) Date of filing: **25.03.82**

(60) Publication number of the earlier application in accordance with Art. 76 EPC: **0 061 901**

(54) **Method of forming an optical waveguide preform.**

(30) Priority: **30.03.81 US 248947**
**30.03.81 US 249022**
**13.04.81 US 253224**

(43) Date of publication of application:
**19.06.85 Bulletin 85/25**

(45) Publication of the grant of the patent:
**04.05.88 Bulletin 88/18**

(84) Designated Contracting States:
**AT BE CH DE FR GB IT LI NL SE**

(56) References cited:
**FR-A-2 498 339**
**GB-A-1 011 570**
**US-A-3 535 017**
**US-A-3 678 328**
**US-A-4 028 082**
**US-A-4 229 197**

(73) Proprietor: **Corning Glass Works**
**Houghton Park**
**Corning New York 14831 (US)**

(72) Inventor: **Blankenship, Michael Gregg**
**Morrcrest Drive R.D. No. 1**
**Corning New York (US)**
Inventor: **Keck, Donald Bruce**
**Chequers Circle**
**Big Flats New York (US)**
Inventor: **Sarkar, Arnab**
**273 Orchard Drive**
**Big Flats New York (US)**

(74) Representative: **Boon, Graham Anthony et al**
**Elkington and Fife High Holborn House 52/54**
**High Holborn**
**London, WC1V 6SH (GB)**

Courier Press, Leamington Spa, England.

## Description

In many applications of single mode optical waveguides, e.g. gyroscopes, sensors and the like, it is important that the propagating optical signal retain the polarization characteristics of the input light in the presence of external depolarizing perturbations. This requires the waveguide to have an azimuthal asymmetry of the refractive index profile.

A slight improvement in the polarization performance of single mode optical waveguides is achieved by distorting the fiber core symmetry as a means of decoupling the differently polarized waves. Two such optical fiber waveguides are disclosed in US—A—4,184,859 and in the publication by V. Ramaswany et al., "Influence of Noncircular Core on the Polarisation Performance of Single Mode Fibers", Electronics Letters, Vol. 14, No. 5, pp. 143—144, 1978. However, the Ramaswamy publication reports that measurements on borosilicate fibers with noncircular cores indicate that the noncircular geometry and the associated stress-induced birefringence alone are not sufficient to maintain polarization in single mode fibers.

The invention disclosed in U.K. Patent Specification GB—A—2,012,983 is based upon the recognition that orthogonally polarized waves are more efficiently decoupled in a waveguide that is fabricated in such a manner as to deliberately enhance stress-induced, or strain birefringence. That patent specification teaches that such behaviour is accomplished by introducing a geometrical and material asymmetry in the preform from which the optical fiber is drawn. The strain-induced birefringence is introduced by at least partially surrounding the single mode waveguide by an outer jacket having a different thermal coefficient of expansion (TCE) than that of the waveguide and a thickness along one direction that is different from its thickness along a direction orthogonal to the one direction. For example, the preform may be a three-layered structure comprising an inner core region surrounded by a cladding layer which is in turn surrounded by an outer jacket layer having a TCE different from that of the cladding layer. Diametrically opposed portions of the outer layer are ground away, and the resultant preform is drawn into a fiber approximating a slab configuration in which the thicknesses of the outer jacket layer are different in two orthogonal directions. A similar result can be accomplished by constructing the preform from an inner core region, a cladding region and two outer jacket layers oppositely disposed along the longitudinal surface of the preform. Difficulty can be encountered in the manufacture of that type of preform since stress is built up in the outer layer. When grinding the outer layer or when cutting slots therein, the built-up stress has a tendency to cause the preform to break. Assuming that a fiber can be drawn from the preform, the stress-forming outer layer is far removed from the fiber core and therefore, the effect of the stress on the core is minimal.

In one embodiment of GB—A—2,012,983 represented by Figures 10—15, a relatively thick substrate tube forms the outer portion of the optical fiber. In order to impart to the fiber the desired characteristics, either the inner or outer surface of the substrate tube is non-circular. Because at least a portion of the substrate wall must be relatively thick, the efficiency of deposition is adversely affected. Also, since the substrate tube forms the outer, compressive layer of the fiber, commercially available tubes may not be usable in the process unless they fortuitously posses the desired expansion and/or viscosity characteristics of the resultant fiber outer layer.

In a fiber such as that illustrated in Figure 12 of GB—A—2,012,983, the outer layer 60 of cladding is referred to herein as the stress cladding. It has been found that the stress at the core of circularly symmetric single mode optical waveguide fiber is equal to the product of f × g where f is a function of geometrical factors and g is a function of glass factors. The function f is given by the equation

$$f = \frac{A_{sc}}{A_f} \qquad (1)$$

where $A_{sc}$ is the cross-sectional area of the stress cladding and $A_f$ is the total cross-sectional area of the fiber. The function f can therefore have a value such that $0 < f < 1$. The function g is given by the equation

$$g = \frac{E(\Delta^a)T}{2(1-v)} \qquad (2)$$

where $A_{sc}$ is the effective elastic modules of the fiber, $\Delta^a$ is the difference between the TCE of the stress cladding and the TCE of the remainder of the fiber, $\Delta T$ is the difference between the lowest set point of the glasses of which the fiber is comprised at room temperature and v is Poissons ratio. Since the aforementioned definition of stress generally applies also to non-symmetrical fibers such as those disclosed in GB—A—2,012,983, it is necessary to maximize f to obtain the greatest core stress and thus obtain the greatest stress birefringence. Values of f greater than 0.9 should be achieved to provide maximum values of stress birefringence. The need to maximize function f is recognized in GB—A—2,012,983 as evidenced by equations (7) and (8) thereof.

Another art-recognized design criterion for single mode optical waveguide is concerned with minimizing loss. A common method of forming single mode optical waveguide preforms is illustrated in Figure 11 of GB—A—2,012,983 which shows a plurality of vapor deposited layers on the inner surface of a substrate tube. The purity of the substrate tube is generally not as high as that of the vapor deposited glass. Therefore, the vapor deposited core glass is isolated from the substrate tube by a layer of vapor deposited optical cladding glass of sufficient thickness. For a single mode fiber having a core cross-section which is circular or nearly circular, the radius $r_s$ of the optical cladding should be at least five times the radius $r_a$ of the core. This estimate is based on the findings reported in the publication: Electronics Letters Vol. 13, No. 15, pp. 443—445 (1977). For fibres having cores of oblong cross-section, this relationship lacks meaningful significance. In such a fiber, the extent of the optical cladding is better described in terms of its thickness. Since the size of a single mode core is related to the transmission wavelength $\lambda$, the thickness of the optical cladding can also be specified in terms of $\lambda$. The aforementioned cladding radius to core radius ratio implies that the thickness of the optical cladding be at least about 20. When a single mode waveguide is designed in accordance with this criterion, loss associated with cladding thickness is limited to an acceptably low value.

The following analysis of GB—A—2,012,983 is made by taking into consideration, inter alia, the speciific embodiment described in conjunction with Figures 10—12 thereof. The fiber of that embodiment will satisfy the requirement that the ratio $A_{sc}/A_f$ exceeds 0.9 except when the substrate tube is completely filled with internal layers during the process of making the preform from which the fiber is drawn. This aforementioned exception is, of course, an impossibility. Since the substrate tube cannot be completely filled during the internal layer deposition process, the total thickness of the internal layers is limited by the internal diameter of the substrate tube. It is well known that the core diameter of a step profile single mode fiber is generally between 3 $\mu m$ and 10 $\mu m$. The outside diameter of the fiber is typically about 125 $\mu m$. If the preform described in GB—A—2,012,983 is formed in accordance with conventional practice so that the ratio $A_{sc}/A_f$ exceeds 0.9, the thickness of the optical cladding layer will be less than 20 $\lambda$ at conventional wavelengths. Thus, the excess fiber loss due to insufficient optical cladding thickness will not be sufficiently low for many applications.

GB—A—1,011,570 discloses a method of forming an optical waveguide preform, comprising the steps of providing a tube of cladding glass, disposing centrally within said tube a glass rod, disposing a pair of glass rods diametrically with respect to the central rod within said tube, and disposing a plurality of rods of cladding glass in at least some of the interstices between said centrally disposed rod, said pair of rods and said tube.

It is an object of the present invention to provide of making an optical waveguide preform from which may be made an improved single polarization single mode optical waveguide exhibiting stress-induced birefringence. The invention further provides a novel method of making an optical waveguide preform from which may be made polarization maintaining single mode optical fibers. The method of this invention is particularly advantageous in that it does not include steps which weaken the fiber preform.

According to the invention there is provided a method of the type disclosed in GB—A—1,011,570, characterized in that said central glass rod has an axially disposed core region surrounded by a layer of cladding glass and said pair of rods is formed of a glass having a temperature coefficient of expansion different from that of the glass of said layer of cladding glass.

An increase in birefringence can be obtained by disposing within the tube on opposite sides of the first rod and orthogonally disposed with respect to the first pair of glass rods a second pair of glass rods having physical characteristics different from those of the first pair of glass rods.

In the accompanying drawings:

Figure 1 is a cross-sectional view of an optical waveguide fiber which can be made using with the method of the present invention;

Figures 2 and 3 are cross-sectional views of further fibers which can be so made;

Figure 4 is a cross-sectional view of a rod-in-tube type draw blank used in the method of the invention tube type draw blank.

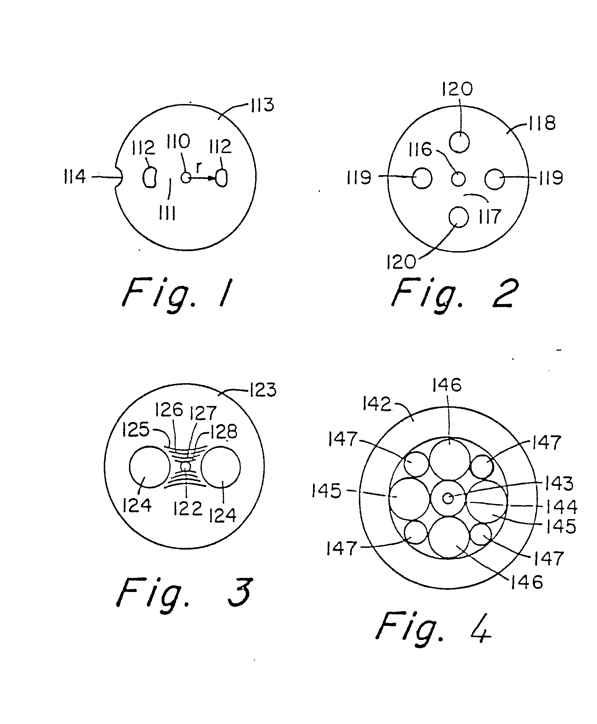

Figures 1 to 3 show fibers which can be produced using the method of the present invention, wherein the fiber core is subjected to a stress-induced birefringence by introducing into the cladding on opposite sides of the core longitudinally extending regions of glass having a TCE different from that of the remainder of the cladding. Figure 1 shows a cross-sectional view of a single polarization optical waveguide fiber comprising a core 110 surrounded by an inner cladding region 111. Diametrically opposed relative to core 110 are two narrow, longitudinally-extending regions 112 formed of a material having a TCE different from that of material 111. While regions 112 are illustrated as being of somewhat random cross-section in Figure 1, the method described below results in the formation of these regions in various specific shapes. When such a fiber is drawn, the longitudinally-extending regions 112 and the cladding regions disposed orthogonally thereto will shrink different amounts whereby regions 112 will be put into a state of tension or compression depending upon the TCE thereof relative to that of the cladding. A strain induced birefringence, which is thus induced in the fiber, reduces coupling between the two orthogonally polarized fundamental modes. Surrounding regions 112 is an outer cladding region 113, the refractive index of which is preferably equal to or less than that of inner cladding region 111. Region 113 may consist, for example, of any of the materials specified above for use as cladding region 111.

The outer surface of cladding region 113 may be circular as illustrated in Figure 1, or it may have areas which are flattened in the manner disclosed in the aforementioned U.K. Patent Application GB—A—2,012,983 for the purpose of aligning a fiber with a polarized light source or with another fiber to which it is to be connected. If the outer surface of cladding 113 is substantially circular, means such as longitudinal depression 114 may be provided for alignment purposes. If it is preferred that the outer surface of the fiber be substantially circular, the input end of the fiber can be properly orientated during its installation into a system. The input end is connected to a polarized light source, and an analyzer is connected to the output end of the fiber. The input end of the fiber is rotated relative to the source until a maximum or a minimum is detected in the light emanating from the output end. When either the maximum or minimum light output is detected, the input end of the fiber is then fixedly mounted with respect to the polarized light source.

Regions 112 should be as close as possible to core 110 without inordinately affecting the light transmitting properties of the fiber. If regions 112 are formed of low loss material having the same refractive index as inner cladding region 111, then the minimum radius $r_m$ of regions 112 is about $1.5 r_a$, where $r_a$ is the radius of core 110. A matching of the refractive index of regions 112 to that of the cladding could be accomplished by employing a cladding formed of $SiO_2$ and forming the stress-inducing regions 112 of, for example, $SiO_2$ doped with one of the following combinations of dopant oxides: $GeO_2$ and $B_2O_3$ or $P_2O_5$ and $B_2O_3$ or $GeO_2$, $P_2O_5$ and $B_2O_3$. An example of a suitable high TCE composition having a refractive index substantially the same as pure $SiO_2$ is $SiO_2$ doped with 12 wt.% $B_2O_3$ and 4 wt.% $P_2O_5$. To ensure that the resultant fiber possesses low loss characteristics, at least the entire central region, i.e. the core and inner cladding region, should be formed by a chemical vapor deposition (CVD) process. If the refractive indices of these two regions are not matched and $r_m$ is too small, i.e. less than about $1.5 r_a$, regions 112 can casue light transmission loss due to scattering.

If regions 112 adversely affect the light transmission properties of the fiber, e.g. the regions 112 are formed of a material which inordinately absorbs light at the transmission wavelengths, the inner radius $r_m$ of these regions should be at least three times and preferably a minimum of five times the radius of the core. This estimate is based on the findings reported in the publication: *Electronics Letters*, Vol. 13, No. 15, pp 443—445 (1977). Obviously, the adverse effect of light absorbing material increases as the distance from the material to the core decreases. However, the magnitude of the birefringence at the core also decreases as the inner radius $r_m$ of the stress-inducing longitudinally extending regions decreases. The optimum inner radius of regions 112 depends upon the specific type of single mode waveguides employed, since the amount of light propagating beyond the core region of a single mode waveguide depends upon such parameters as core radius and refractive index.

A fiber may contain a second set of diametrically opposed longitudinally-extending regions having physical characteristics which are different from those of the first set of stress-inducing regions. The fiber illustrated in Figure 2 comprises core 116, inner cladding region 117, and outer cladding region 118. Two longitudinally-extending regions 119, which have a TCE different from that of the cladding regions, are diametrically opposed relative to core 116. Orthogonally disposed with respect to regions 119 is a second pair of longitudinally extending regions 120 which may comprise a light absorbing glass or a glass having a TCE which deviates from that of region 117 in a direction different from the direction in which the TCE of region 119 deviates from that of region 117. For example, the TCE of regions 120 should be less than the TCE of region 117 if the TCE of regions 119 is greater than the TCE of region 117.

If the cladding regions consisted of pure $SiO_2$, regions 119 could comprise $SiO_2$ doped with $B_2O_3$ and $P_2O_5$ while regions 120 could comprise $SiO_2$ doped with $TiO_2$. Regions 119 will be in a state of tension while regions 120 will be in a state of compression. The effect of the two tensive regions is additive with that of the two compressive regions, the resultant combination providing a greater magnitude of stress-induced birefringence than that which would be obtainable with either regions 119 or regions 120 alone.

The $TiO_2$ doped regions are lossy for two reasons. The $TiO_2$-$SiO_2$ glass tends to phase separate and form small inhomogeneous scattering sites which increase scattering loss. Also, the $TiO_2$ raises the refractive index of the region to a value greater than that of region 117 so that light from core 116 that reaches regions 120 will tend to refract into and through regions 120 and thus away from core 116. Stress regions can be made lossy by forming them from glass rods which have been melted in crucibles containing absorption impurities such as iron, nickel, cobalt, copper and the like.

The aforementioned U.K. Patent Application GB—A—2,012,983 states that the methods disclosed therein are capable of fabricating fibres with a strain birefringence $\Delta n$ as large as $40 \times 10^{-5}$ and that the beat length L for such a value of $\Delta n$ is 2.5 mm at 1 µm wavelength and 1.25 at 0.5 µm. Some applications, however, require even shorter beat lengths, thereby necessitating values of $\Delta n$ around $10^{-3}$. The following theoretical example indicates that such values of $\Delta n$ are easily achieved by the fiber construction of the present invention. Referring to Figure 3, there is illustrated a fiber having a core 122, cladding 123 and two longitudinal regions 124 of circular cross-section. The diameter of core 122 is 5 µm, that of stress-producing regions 124 is 25 µm and that of cladding 123 is 125 µm. The centers of circular regions 124 are located at a radius of 25 µm. The specific composition of core 122 is immaterial, it merely being necessary that the refractive index thereof the greater than that of cladding 123 which consists of pure $SiO_2$. The composition of regions 124 is 5 wt.% $P_2O_5$, 12 wt.% $B_2O_3$ and wt.% $SiO_2$. Birefringence calculations were based on the publication: G. W. Scherer, "Stress-Induced Index Profile Distortion in Optical Waveguides", *Applied Optics*. Vol. 19, No. 12, June 1980, pp. 2000—2006. Using computer techniques, the birefringence in the region of the core and inner cladding due to one of the regions 124 was determined. Then the birefringence in the central region due to the other of regions 124 was determined and added to the first calculated value. The results are plotted in Figure 3. Lines 125, 126, 127 and 128 are lines of equal birefringence of $0.4 \times 10^{-3}$, $0.5 \times 10^{-3}$, $0.6 \times 10^{-3}$ and $0.7 \times 10^{-3}$, respectively, the latter line passing through core 122.

Referring to Figure 4 there is shown a rod-in-tube type preform which is employed according to the invention to form fibers of the type illustrated in Figures 1 to 3. A plurality of rods of appropriate material is inserted into tube 142 of a cladding material such as $SiO_2$. Centrally disposed within tube 142 is a rod having a core 143 of high purity glass and cladding layer 144 of high purity glass having a refractive index lower than that of core 143. Core 143 and cladding 144 are preferably formed by a CVD technique. Diametrically disposed with respect to the central rod are two rods 145 of glass having a high TCE relative to tube 142. A second pair of rods 146 is orthogonally disposed with respect to rods 145. To form a fiber of the type shown in Figures 1 and 3, rods 146 can be formed of the same material as tube 142. To form a fiber of the type illustrated in Figure 2, rods 146 can be formed of a material having a low TCE relative to tube 142 and/or a light-absorbing material. Rods 147 of cladding material occupy some of the interstices between the aforementioned rods. If the resultant preform contains large unoccupied areas, the tensile regions of the resultant fiber will appear non-circular in cross-section as illustrated in Figure 1 due to the distortion of the rods as they fill in interstices adjacent thereto. The core of such a fiber will also tend to be noncircular. If all of the illustrated interstices are packed with small rods (not shown) of cladding material, the core and the tensile regions will appear more nearly circular in cross-section in the resultant fiber.

## Claims

1. A method of forming an optical waveguide preform, comprising the steps of providing a tube (142) of cladding glass, disposing centrally within said tube (142) a glass rod, disposing a pair of glass rods (145) diametrically with respect to the central rod within said tube (142), and disposing a plurality of rods (147) of cladding glass in at least some of the interstices between said centrally disposed rod, said pair of rods (145) and said tube (142), characterized in that said central glass rod has an axially disposed core region (143) surrounded by a layer of cladding glass (144) and said pair of rods (145) is formed of a glass having a temperature coefficient of expansion different from that of the glass of said layer of cladding glass (144).

2. A method in accordance with claim 1, further comprising the steps of disposing within said tube (142) on opposite sides of said central rod and orthogonally disposed with respect to said first pair of glass rods (145) a second pair of glass rods (146) having a temperature coefficient of expansion different from those of said first pair of glass rods (145).

3. A method in accordance with claim 2, wherein the second pair of glass rods (146) comprises a light absorbing glass.

4. A method in accordance with claim 2, wherein the second pair of glass rods (146) comprises a glass having a temperature coefficient of expansion which deviates from that of the layer of cladding glass (144) in a direction different from the direction in which the temperature coefficient of expansion of the first pair of glass rods (145) deviates from that of the layer of cladding glass (144).

5. A method in accordance with any preceding claim, wherein the radius of the layer of cladding glass (144) is at least five times the radius of the core region (143).

## Patentansprüche

1. Verfahren zur Bildung eines optischen Wellenleiterrohlings, bestehend aus den Verfahrensschritten, daß ein Rohr (142) aus Mantelglas geschaffen wird, daß zentral innerhalb dieses Rohres (142) ein Glasstab angeordnet wird, daß ein Paar Glasstangen (145) diametral bezüglich der zentralen Stange innerhalb des Rohres (142) angeordnet wird und daß eine Vielzahl von Stangen (147) aus Mantelglas in wenigstens einigen der Zwischenräume zwischen der zentral angeordneten Stange, dem Paar Stangen (145) und dem Rohr (142) angeordnet wird, dadurch gekennzeichnet, daß die zentrale Glasstange einen in axialer Richtung angeordneten Kernbereich (143) besitzt, der von einer Schicht aus Mantelglas (144) umgeben ist, und daß das Paar Stangen (145) aus einem Glas gebildet wird, das einen Wärmedehnungskoeffizienten aufweist, der sich von dem des Glases der Schicht aus Mantelglas (144) unterscheidet.

2. Verfahren nach Anspruch 1, weiterhin gekennzeichnet durch die Verfahrensschritte, daß innerhalb des Rohres (142) an gegenüberliegenden Seiten der zentralen Stange und orthogonal zu dem ersten Paar Glasstangen (145) ein zweites Paar von Glasstangen (146) angeordnet wird, das einen Wärmedehnungskoeffizienten besitzt, der sich von denen des ersten Paars Glasstangen (145) unterscheidet.

3. Verfahren gemäß Anspruch 2, dadurch gekennzeichnet, daß das zweite Paar Glasstangen (146) ein lichtabsorbierendes Glas aufweist.

4. Verfahren nach Anspruch 2, dadurch gekennzeichnet, daß das zweite Paar Glasstangen (146) ein Glas aufweist, das einen Wärmedehnungskoeffizienten besitzt, der von dem der Schicht aus Mantelglas (144) in einer Richtung abweicht, die sich von der Richtung unterscheidet, in der der Wärmedehnungskoeffizient des ersten Paars Glasstangen (145) von dem der Schicht des Mantelglass (144) abweicht.

5. Verfahren nach einem vorangehenden Anspruch, dadurch gekennzeichnet, daß der Radius der Schicht des Mantelglases (144) wenigstens fünf Mal dem Radius des Kernbereichs (143) entspricht.

## Revendications

1. Un procédé pour former une préforme de guide d'onde optique, comprenant les étapes qui consistent à fournir un tube (142) de verre de gainage, à disposer centralement une baguette de verre dans ledit tube (142), à disposer une paire de baguettes de verre (145) diamétralement par rapport à la baguette centrale dans ledit tube (142), et à disposer plusieurs baguettes (147) de verre de gainage dans certains au moins des interstices compris entre ladite baguette disposée centralement, ladite paire de baguettes (145) et ledit tube (142), caractérisé en ce que ladite baguette de verre centrale comporte une région de coeur (143) disposée axialement et entourée par une couche de verre de gainage (144), et ladite paire de baguettes (145) est constituée d'un verre dont le coefficient de dilatation thermique est différent de celui du verre de ladite couche de verre de gainage (144).

2. Un procédé selon la revendication 1, comprenant de plus les étapes qui consistent à disposer dans ledit tube (142), sur des côtés opposés de ladite baguette centrale et orthogonalement par rapport à ladite première paire de baguettes de verre (145), une seconde paire de baguettes de verre (146) dont le coefficient de dilatation thermique est différent de ceux de ladite première paire de baguettes de verre (145).

3. Un procédé selon la revendication 2, dans lequel la seconde paire de baguettes de verre (146) comprend un verre absorbant la lumière.

4. Un procédé selon la revendication 2, dans lequel la seconde paire de baguettes de verre (146) comprend un verre dont le coefficient de dilatation thermique s'écarte de celui de la couche de verre de gainage (144) dans un sens différent du sens dans lequel le coefficient de dilatation thermique de la première paire de baguettes de verre (145) s'écarte de celui de la couche de verre de gainage (144).

5. Un procédé selon l'une quelconque des revendications précédentes, dans lequel le rayon de la couche de verre de gainage (144) est d'au moins cinq fois le rayon de la région de coeur (143).

Fig. 1

Fig. 2

Fig. 3

Fig. 4